# EUROPEAN PATENT SPECIFICATION

(11) **EP 2 275 912 B1**
(45) Date of publication and mention of the grant of the patent: **01.01.2020**
(21) Application number: 09014250.6
(22) Date of filing: 13.11.2009
(51) Int. Cl.: G06F 3/0481, H04M 1/725

(54) **Terminal for broadcasting and method of controlling the same**
Endgerät zum Senden und Steuerungsverfahren dafür
Terminal de diffusion et son procédé de commande

(30) Priority: 10.07.2009 KR 20090063024
(43) Date of publication of application: 19.01.2011
(73) Proprietor: LG ELECTRONICS INC., Yeongdeungpo-gu Seoul 150-721 (KR)
(72) Inventor: Lee, Ju Hwan, Seocho-gu Seoul 137-724 (KR); Park, Hui Won, Seocho-gu Seoul 137-724 (KR); Ahn, Sung Joon, Seocho-gu Seoul 137-724 (KR); Seong, Hang Dong, Seocho-gu Seoul 137-724 (KR)
(74) Representative: Katérle, Axel

(56) References cited:
- EP-A2- 1 022 898
- US-A1- 2002 196 370
- US-A1- 2004 263 686
- US-A1- 2006 020 904
- US-A1- 2008 252 780
- US-A1- 2009 089 668

## Description

The present disclosure relates to a broadcasting terminal capable of receiving and playing broadcasting contents, and more particularly, to a broadcasting terminal providing a widget and a method of controlling the same.

As digital broadcasting is recently commercialized, various forms of broadcasting standards are being developed. Examples of broadcasting systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and Internet Protocol Television (IPTV).

Terminals for broadcasting receiving and playing broadcasting signals of the above broadcasting standards provide users with widgets that carry various information such as weather information, stock information, and time information.

Embodiments provide a broadcasting terminal and a method of controlling the same, which allow a user to easily distinguish broadcasting captions when the broadcasting captions are displayed on a position where widgets are displayed, in a state that at least one widget is displayed on a broadcasting screen.

Document US 2009/0 089 668 A1 may be construed to disclose a smart-sizing, browser-based widget using both information defined by a user (e.g., a width value, etc.) and information provided by the web browser and web page within which it is being displayed, to calculate, in real-time, which of its elements to display, and at what scale, so as to make the most efficient use of its available space. The determination as to which elements to display may be a function of a pre-defined relationship among the elements.

Document US 2006/0 020 904 A1 may be construed to disclose a method for navigating information in a mobile terminal. The method includes displaying, on a graphical user interface of the mobile terminal, a plurality of window regions, wherein each region is a container for objects and provides an overview of features and functions of the terminal and a status of the terminal. A first user input selects of one of the regions and in response to the first user input, displaying at least one object corresponding to a selected region in a portion of the selected region.

Document US 2002/0 196 370 A1 may be construed to disclose a method for placing overlay elements in images of a digital video so that desirable viewing areas of the images are not occluded by the overlay element. The method includes extracting frames from the video, each of the frames defining an image which may have one or more desirable viewing areas. For each frame, an area is selected in the image for placing an overlay element and the percentage the overlay element overlaps the desirable viewing areas is determined for the selected area. The overlay element is placed in the selected area if the percentage is below a maximum allowed predetermined percentage of overlapping. If it is not, one or more other areas in the image are selected and/or the size, shape, aspect ratio of the overlay element is changed until a position and/or size, shape, aspect ratio is found which minimizes occlusion of the desirable viewing areas in the image. Further, a device, such as a video receiver or video transmitter, for placing an overlay element in images of a digital video so that desirable viewing areas of the images are not occluded by the overlay element. In such a device, a frame extractor extracts frames from the video, each of the frames defining an image having at least one desirable viewing area. An image processor analyzes the images of the frames to identify desirable viewing areas in the images of the frames. An overlay element locator places the overlay element in the images of the frames in a manner which minimizes the occlusion of the desirable viewing areas.

Document US 2004/0 263 686 A1 may be construed to disclose an apparatus for displaying a double screen in a wide screen display device, the apparatus including a video interface to receive a first and a second video signal from a plurality of video signals according to a selection control signal, wherein each of the first and the second video signals have a general screen aspect ratio; a scaler to scale the first video signal to a resolution of a main screen and to scale the second video signal to a resolution of a subscreen with the general screen aspect ratio; and a control unit to output the selection control signal to display the double screen, control scaling of the first video signal and second video signal, and to simultaneously display the scaled first video signal on an area of a screen and the scaled second video signal on a portion of a remaining area of the screen.

Document EP 1 022 898 A2 may be construed to disclose an AV (audio visual) apparatus, such as a set-top box or the like, inputs, when displaying display information (OSD (on screen display)) of the apparatus on a display device, such as a digital television or the like, display conditions (i.e., control information for controlling display of OSD) for other OSDs to be displayed on the display device. Each AV apparatus sets the display conditions of the OSD of the apparatus based on the display conditions of the other OSDs, and outputs the OSD and the display conditions of the apparatus to the display device. The display device displays OSD of each AV apparatus based on the input display conditions. According to this configuration, it is possible to reduce the burden on the display device, and to efficiently display display information of each information supply source.

According to the disclosure, there are provided an apparatus, a method and a computer-readable medium according to the independent claims. Developments are set forth in the dependent claims.

A terminal for broadcasting and a method of controlling the same can allow a user to easily distinguishing a broadcasting caption even if the broadcasting caption is displayed on a position where widgets are displayed on a broadcasting screen.

The details of one or more embodiments are set forth in the accompanying drawings and the description below. Other features will be apparent from the description and drawings, and from the claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a diagram illustrating a broadcasting system according to an embodiment.
Fig. 2 is a block diagram illustrating a broadcasting terminal according to an embodiment.
Fig. 3 is a flowchart illustrating a process of controlling a widget display operation of a broadcasting terminal according to a first comparative example.
Figs. 4 to 9 are diagrams illustrating screen states showing a process of controlling a widget display operation of a broadcasting terminal according to the first comparative example.
Fig. 10 is a flowchart illustrating a process of controlling a widget display operation of a broadcasting terminal according to a second comparative example.
Figs. 11 to 14 are diagrams illustrating screen states showing a process of controlling a widget display operation of a broadcasting terminal according to the second comparative example.
Fig. 15 is a flowchart illustrating a control process for scaling the size of a broadcasting screen of a broadcasting terminal according to an embodiment.
Fig. 16 is a diagram illustrating a screen state showing a process of scaling a broadcasting play screen including widgets into an aspect ratio of 4:3 according to the embodiment.
Fig. 17 is a diagram illustrating a screen state showing a process of scaling a broadcasting play screen including widgets into an aspect ratio of 16:9 according to the embodiment.

### DETAILED DESCRIPTION OF THE EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

Hereinafter, a broadcasting terminal according to an embodiment will be described in detain with reference to the accompanying drawings. The suffixes "module" and "unit" used for components in this description are used only for simplicity of explanation, and do not have discriminating meanings or roles in itself.

Examples of broadcasting terminals set forth herein include mobile phones, smart phones, laptop computers, desktop computers, digital TVs, Personal Digital Assistants (PDAs), Portable Multimedia Player (PMP), and navigations that can receive and play broadcasting contents.

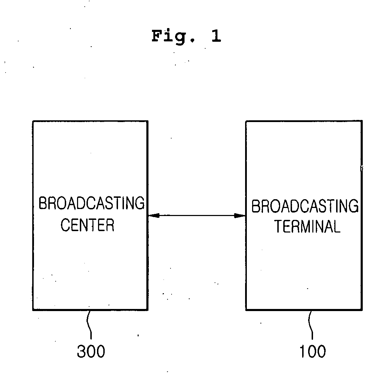

Fig. 1 is a diagram illustrating a broadcasting system according to the embodiment.

Referring to Fig. 1, a broadcasting system includes a broadcasting center 300 providing broadcasting signals and a broadcasting terminal 100 receiving and playing the broadcasting signals from the broadcasting center 300.

The broadcasting system includes Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and Internet Protocol Television (IPTV).

The broadcasting center 300 generates broadcasting signals including at least one of caption, image, and sound, and sends the generated broadcasting signals.

In this case, the broadcasting center 300 may generate broadcasting signals further including position information of a caption on a screen of the broadcasting terminal 100 when generating the broadcasting signal including the caption. That is, the broadcasting center 300 may send a broadcasting signal including a caption and position information of the caption on a broadcasting screen.

The broadcasting center 300 may send a broadcasting signal including widgets that are User Interface (UI) objects providing at least one information.

The broadcasting terminal 100 receives the broadcasting signal from the broadcasting center 300, performs a demultiplexing operation separating at least one of caption, image, and sound from the received broadcasting signal, and decodes the demultiplexed caption, image, and sound data to output.

The broadcasting terminal 100 may receive a broadcasting signal including widgets from the broadcasting center 300, and display the received widgets on a broadcasting screen or store the received widgets in a memory 140.

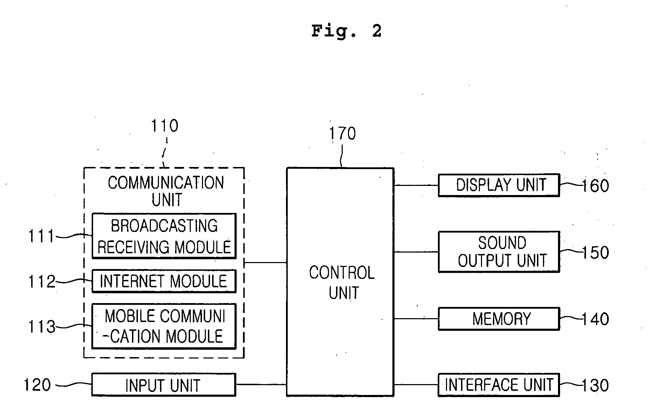

Hereinafter, a configuration of a broadcasting terminal according to the embodiment will be described in detail with reference to Fig. 2.

Fig. 2 is a block diagram illustrating a broadcasting terminal according to the embodiment.

Referring to Fig. 2, a broadcasting terminal 100 may include a communicating unit 110, an input unit 120, an interface unit 130, a memory 140, a sound output unit 150, a display unit 160, and a control unit 170. The components illustrated in Fig. 2 are not essential. For example, the broadcasting terminal 100 may include more or less components than the aforementioned components.

Hereinafter, detailed descriptions of the components will be made below.

The communication unit 110 may include one or more module that enables wire/wireless communication between a broadcasting terminal 100 and a broadcasting center 300, or a broadcasting terminal 100 and a network including an external Internet server. For example, the communication unit 110 may include a broadcasting receiving module 111, an Internet module 112, and a mobile communication module 113.

The broadcasting receiving module 111 receives a broadcasting signal and/or broadcasting-related information from the broadcasting center 300 through a broadcasting channel, and demultiplexes and decodes the received broadcasting signal to output.

The broadcasting channel may include satellite channels and terrestrial channels. A broadcasting management server may mean a server generating and transmitting a broadcasting signal and/or broadcasting-related information, or a server receiving and transmitting the generated broadcasting signal and/or broadcasting-related information to a terminal. The broadcasting signal may include broadcasting signals of a combination type in which a data broadcasting signal is combined with a TV broadcasting signal or a radio broadcasting signal, as well as a TV broadcasting signal, a radio broadcasting signal and a data broadcasting signal.

The broadcasting-related information may mean information related to broadcasting channels, broadcasting programs, or broadcasting service providers. The broadcasting-related information may also be provided through a mobile communication network. In this case, the broadcasting-related information may be received through a mobile communication module 113.

The broadcasting-related information may exist in various forms. For example, the broadcasting-related information may exist in the form of Electronic Program Guide (EPG) of Digital Multimedia Broadcasting (DMB) or Electronic Service Guide (ESG) of Digital Video Broadcast-Handheld (DVB-H).

The broadcasting receiving module 111 may receive digital broadcasting signals using digital broadcasting systems such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and Internet Protocol Television (IPTV). The broadcasting receiving module 111 may be configured to be suitable for other broadcasting systems as well as the above digital broadcasting systems. As described above, the broadcasting signals and/or the broadcasting-related information received through the broadcasting receiving module 111 may be stored in a memory 140.

The broadcasting receiving module 111 may receive a broadcasting signal including a caption and position information of the caption on a broadcasting screen from the broadcasting center 300, and receive at least one widgets from the broadcasting center 300 to display or store them in the memory 140.

The Internet module 113, which is a module for wire/wireless Internet connection, may be internally or externally installed in the broadcasting terminal 100. In this case, Wireless LAN (WLAN) (Wi-Fi™), Wireless broadband (Wibro™), World Interoperability for Microwave Access (Wimax), and High Speed Downlink Packet Access (HSDPA) may be used as a wireless Internet technology.

The Internet module 112 may receive a broadcasting signal of IPTV standards from the broadcasting center 300 through Internet protocols. The Internet module 112 may receive at least one widget from the broadcasting center 300 and or an external Internet server.

The mobile communication module 113 transmits/receives wireless signals to/from at least one of a base station, an external terminal, and a server on a mobile communication network. The wireless signals may include audio call signals, video telephone call signals, or various types of data according to transmission/reception of text/multimedia messages.

Also, the mobile communication module 113 may receive at least one widget from an external service server.

The input unit 120 generates input data for controlling the operation of the broadcasting terminal 100 by a user. The input unit 130 may include a key pad, a dome switch, a touchpad (e.g., static pressure/capacitance), a jog wheel, and a jog switch.

The interface unit 130 serves as a passage to all external devices connected to the broadcasting terminal 100. The interface unit 130 receives data from the external devices, delivers power to respective components in the broadcasting terminal 100, and transmits data in the broadcasting terminal 100 to the external device. For example, the interface unit 130 may include a wired/wireless headset port, an external power port, a wire Internet connection port, a wire/wireless data port, a memory card port, a USB port, an audio I/O port, a video I/O port, and an earphone port.

The memory 140 may store programs for an operation of the control unit 170, and temporarily store inputted/outputted data (for example, broadcasting programs and videos).

The memory 140 may include at least one storage medium of memories of plash memory types, hard disk types, multimedia card micro types, and card types (for example, SD or XD memories), Random Access Memory (RAM), Static Random Access Memory (SRAM), Electrically Erasable Programmable Read-Only Memory (EEPROM), Programmable Read-Only Memory (PROM), magnetic memory, magnetic disk, and optical disk.

The sound output unit 150 may output audio data in the broadcasting signal received from the broadcasting receiving module 111 or the Internet module 112, or output audio data stored in the memory 140. The sound output unit 150 may include a receiver, a speaker, and a buzzer.

The display unit 160 displays information processed in the broadcasting terminal 100. For example, if the broadcasting terminal 100 is in a broadcasting receiving mode, the broadcasting terminal 100 may display UI objects related to the broadcasting on the broadcasting screen. In this case, the UI objects may become widgets received from the communication unit 110 or widgets stored in the memory 140.

The display unit 160 may include at least one of Liquid Crystal Display (LCD), Thin Film Transistor-Liquid Crystal Display (TFT LCD), Organic Light-Emitting Diode (OLED), flexible display, and 3-D display.

When the display unit 160 and a sensor sensing the touch operation (hereinafter, referred to as a "touch sensor") have a layer structure mutually (hereinafter, referred to as a "touch screen"), the display unit 160 may be used as an input device as well as an output device. The touch sensor may have forms of, for example, a touch film, a touch sheet, and a touch pad.

The touch sensor may be configured to convert changes of pressure or electrostatic capacity generated in a specific spot of the display unit 160 into an electrical input signal. The touch sensor may detect a touch pressure as well as a touched position and a touched area.

When there is a touch input with respect to the touch sensor, signals corresponding to the touch input are sent to a touch controller. The touch controller processes the signals and transmits the corresponding data to the control unit 170. Thus, the control unit 170 may find which spot on the display unit 160 was touched.

The control unit 170 controls overall operations of the broadcasting terminal 100 generally. For example, the control unit 170 performs controls and processes related to broadcasting play, data communication, and video play.

For example, various embodiments set forth herein may be implemented in readable media by computers or other devices similar thereto using software, hardware, or a combination thereof.

If implemented by hardware, embodiments may be implemented using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and other electrical units for performing functions. Embodiments set forth herein may be implemented in the control unit 170 by itself.

If implemented by software, embodiments having procedures and functions set forth herein may be implements separate software modules. The software modules may perform one or more function and operations set forth herein, respectively. Software codes may be implemented in a software application that is written in appropriate programming languages. The software codes may be stored in the memory 140 and be executed by the control unit 170.

Hereinafter, respective embodiments and comparative examples will be described in detail with reference the accompanying drawings.

### <First Comparative Example>

A first comparative example is to control display operations of widgets so as to allow a user to easily identify broadcasting captions when the broadcasting captions are displayed on a position where widgets are displayed in a state that at least one widget is displayed on a broadcasting screen.

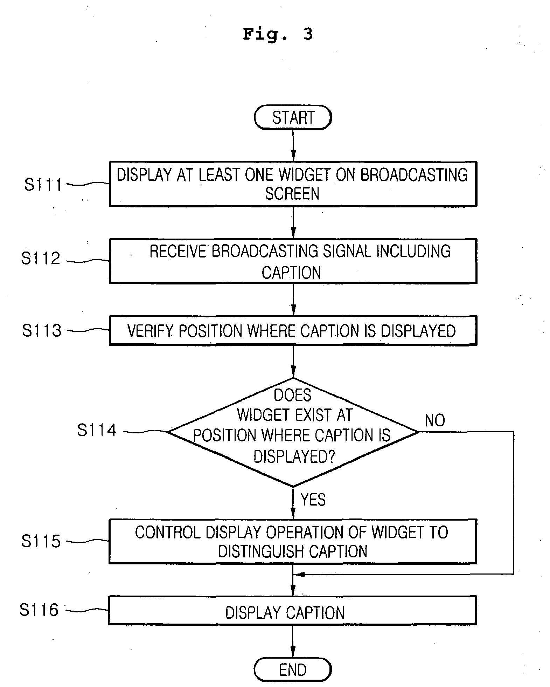

Hereinafter, a process of controlling display operations of widgets of a broadcasting terminal according to the first comparative example will be described in detail with reference to Fig. 3.

Fig. 3 is a flowchart illustrating a process of controlling a widget display operation of a broadcasting terminal according to the first comparative example.

Referring to Fig. 3, in operation Sill, a control unit 170 of a broadcasting terminal 100 displays widgets in a predetermined region on a broadcasting screen when a key signal is inputted from a user through an input unit 120 to display at least one widget, in a state
that a broadcasting signal received from a broadcasting receiving module 111 or an Internet module 112 is displayed on the screen of a display unit 160.

Examples of the widgets, which are application software providing at least one information on a broadcasting screen, may include weather information providing widgets, stock information providing widgets, and time information providing widgets.

Also, the widgets may be displayed at one of edge regions on the broadcasting screen as a default, and be moved according to a user's manipulation.

The widgets may be provided in the memory 140 as a default, or be downloaded from an external server through the communication unit 110 to be stored in the memory 140.

In operation S113, the control unit 170 verifies a position on the broadcasting screen where a caption will be displayed when a broadcasting signal including the caption is received from the broadcasting receiving module 111 or the Internet module 112 in operation S 112, in a state that the widgets are displayed on the broadcasting screen.

In addition to the caption in the received broadcasting signal of operation S 112, the broadcasting signal may further include information representing the position on the broadcasting screen where the caption will be displayed.

According to the result of the above verification, the control unit 170 verifies whether the widgets exist at the position where the caption is displayed.

That is, the control unit 170 analyzes the position information included in the broadcasting signal received in operation S 112, and verifies whether the widgets exist in the analyzed display position of the caption.

The control unit 170 may find the predetermined display position of the received caption, and verify whether the widgets exist in the predetermined display position of the caption.

If the caption is received, the control unit 170 checks whether the color of a predetermined range of the position where the widgets are displayed is changed. If result of the check shows that the color value is changed, the control unit 170 may judge that the received caption is displayed at the position where the widgets are displayed.

As an example, if the background color of the received caption is blue, the color on the display position of the widgets is changed within a range of red:green:blue=0∼3:0∼88:255, then the control unit 170 judges that a caption of the blue background color is displayed on the display position of the widgets.

As described above, if the widgets exist in a position where the received caption will be displayed in operation S 114, the control unit 170 displays the received caption in operation S 116 after controlling the display operations of the widgets to allow the received caption to be recognized on the broadcasting screen in operation S115.

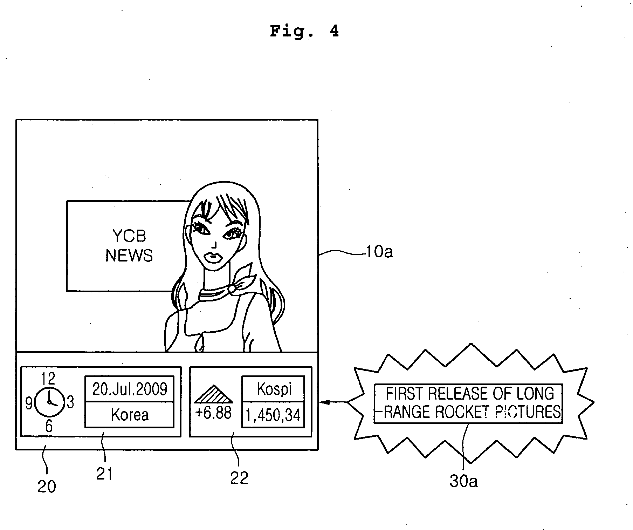

Hereinafter, a process of controlling a widget display operation of a control unit 170 will be described in detail with reference to Figs. 4 to 9.

Figs. 4 to 9 are diagrams illustrating screen states showing a process of controlling a widget display operation of a broadcasting terminal according to the first comparative example.

Referring to Fig. 4, the control unit 170 displays predetermined widgets 21 and 22 in a predetermined region 20 of a broadcasting screen 10a when a key signal is inputted through an input unit 120 to display the widgets 21 and 22 on the broadcasting screen 10a, in a state that a broadcasting received through a broadcasting receiving module 111 or an Internet module 112 is displayed on a screen.

Fig. 4 show that the first widget 21 providing time information and the second widget 22 providing stock information are displayed on a lower region 20 of edge regions of the broadcasting screen 10a.

In this case, the first and second widgets 21 and 22 may be moved on the broadcasting screen 10a according to a user's manipulation, and be displayed on a predetermined region of the broadcasting screen 10a when displayed for the first time.

The first and second widgets 21 and 22 may be displayed on the broadcasting screen 10a in an On Screen Display manner, and be overlapped or transparently displayed on the broadcasting screen 10a. In this case, the transparency of the first and second widgets 21 and 22 may be varied according to a user's manipulation.

If one of the first and second widgets 21 and 22 is selected, the control unit 170 may control the Internet module 112 to access an external service server linked to the selected widget, and download detail information related to the selected widget from the external service server to display the downloaded information on the broadcasting screen 10a or store the downloaded information in the memory 140.

In this case, if the control unit 170 receives a broadcasting signal including a caption ("first release of long-range rocket pictures") 30a through the broadcasting receiving module 111 or the Internet module 112, the control unit 170 checks whether the display position of the received caption 30a is the lower region 20 where the first and second widgets 21 and 22 are displayed.

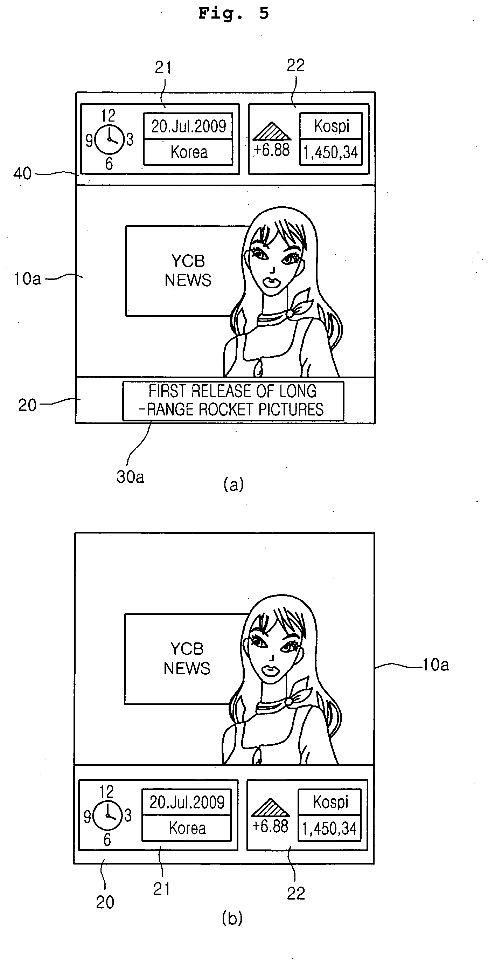

If the display position of the received caption 30a is the lower region 20, as shown in Figs. 5 to 7, the control unit 170 displays the received caption 30a on the lower region 20 of the broadcasting screen 10a, and moves the positions of the first and second widgets 21 and 22 to other regions on the broadcasting screen 10a except the lower region 20. In this case, the caption 30a may be scrolled from a first direction to a second direction, or may be displayed in a still image.

Fig. 5(a) shows that the control unit 170 has moved the positions of the first and second widgets 21 and 22 to an upper region 40 of the broadcasting screen 10a.

In this case, the control unit 170, as shown in Fig. 5(b), may move the positions of the first and second widgets 21 and 22 to the initial lower region 20 when the display of the caption 30a is completed.

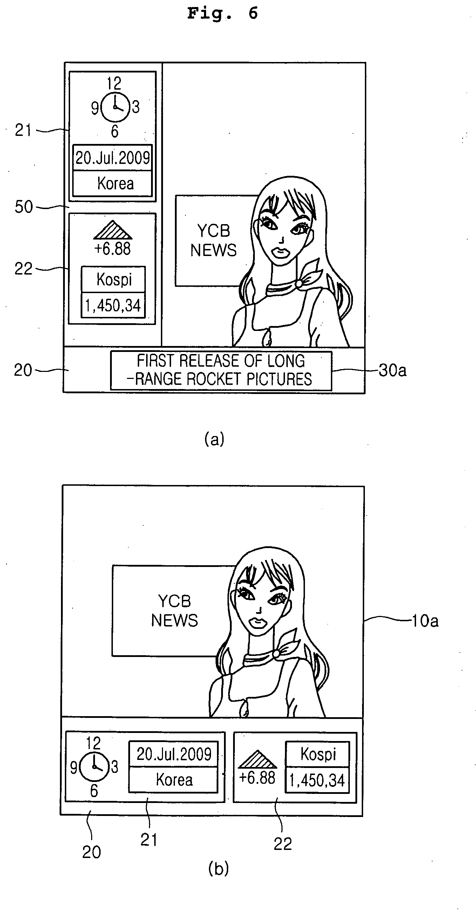

Fig. 6(a) shows that the control unit 170 has moved the positions of the first and second widgets 21 and 22 to a left region 50.

In this case, the control unit 170, as shown in Fig. 6(b), may move the positions of the first and second widgets 21 and 22 to the initial lower region 20 when the display of the caption 30a is completed.

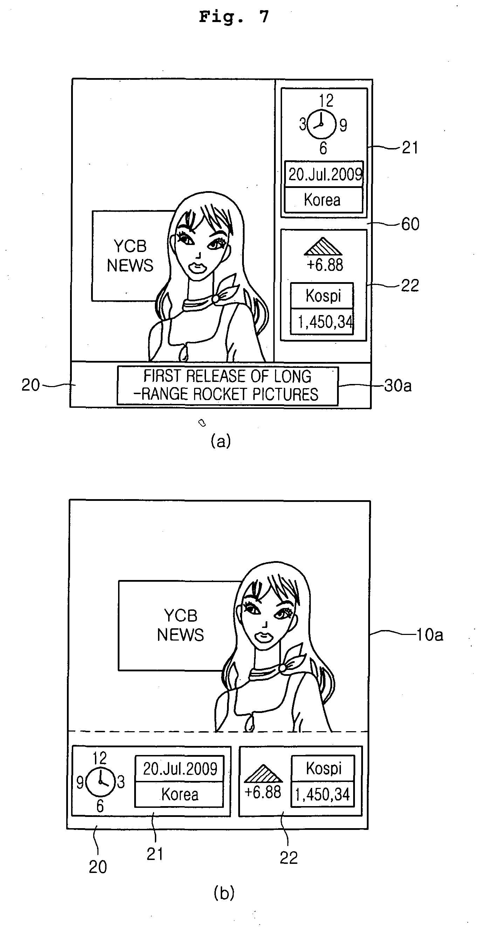

Fig. 7(a) shows that the control unit 170 has moved the positions of the first and second widgets 21 and 22 to a right region 60.

In this case, the control unit 170, as shown in Fig. 7(b), may move the positions of the first and second widgets 21 and 22 to the initial lower region 20 when the display of the caption 30a is completed.

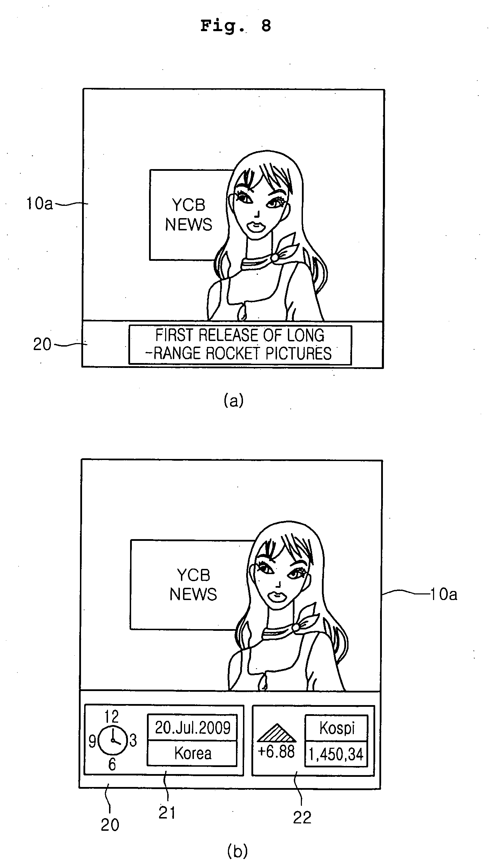

If the display position of the received caption 30a in Fig. 4 is the lower region 20 where the first and second widgets 21 and 22 are displayed, as shown in Fig. 8, the control unit 170 may display the received caption 30a on the lower region 20 of the broadcasting screen 10a, and stop the display of the first and second widgets 21 and 22 until the display of the caption 30a is completed.

Fig. 8(a) shows that the control unit 170 has displayed the received caption 30a on the lower region 20 where the first and second widgets 21 and 22 are initially displayed, and has stopped the display of the first and second widgets 21 and 22.

In this case, the control unit 170 may re-display the first and second widgets 21 and 22 on the lower region 20 as shown in Fig. 8(b), when the display of the caption 30a is completed.

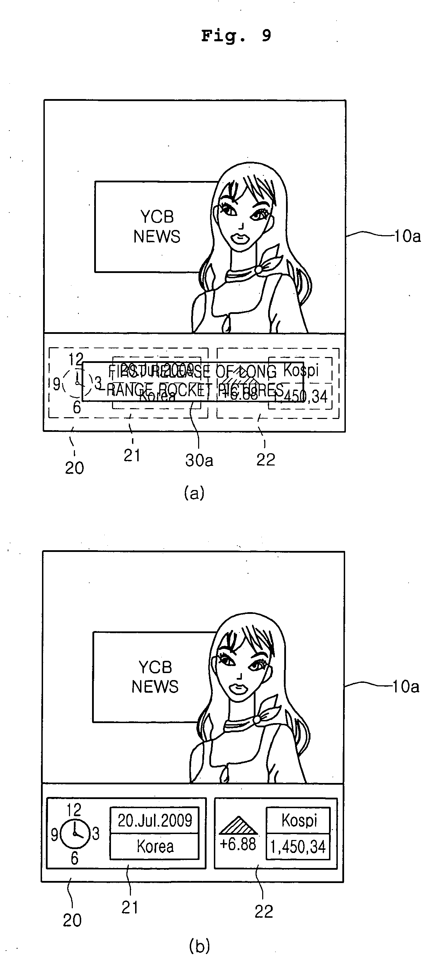

If the display position of the received caption 30a in Fig. 4 is the lower region 20 where the first and second widgets 21 and 22 are displayed, as shown in Fig. 9, the control unit 170 may allow the received caption 30a and the first and second widgets 21 and 22 to overlap each other in the lower region 20 and change the transparency of the first and second widgets 21 and 22 to allow a user to recognize the caption 30a.

Fig. 9(a) shows that the control unit 170 has allowed the caption 30a and the first and second widgets 21 and 22 to overlap each other in the lower region 20, and has lowered the transparency of the first and second widgets 21 and 22 to a predetermined level to allow a user to recognize the caption 30a. In this case, the transparency of the first and second widgets 21 and 22 may be varied according to a user's manipulation.

The control unit 170 may increase the distinctiveness of the caption 30a by changing the font attributes of the caption 30a. For example, a predetermined color may be inserted into the background of the caption 30a. Alternatively, the caption 30a may be changed into a bold font, or may be displayed to blink.

The control unit 170 may recover the transparency of the first and second widgets 21 and 22 to the previous transparency as shown in Fig. 9(b) when the display of the caption 30a is completed.

### <Second Comparative Example>

A second comparative example is to control display operations of widgets so as to allow a user to easily identify video captions when the video captions are displayed on a position where widgets are displayed in a state that at least one widget is displayed on a video play screen.

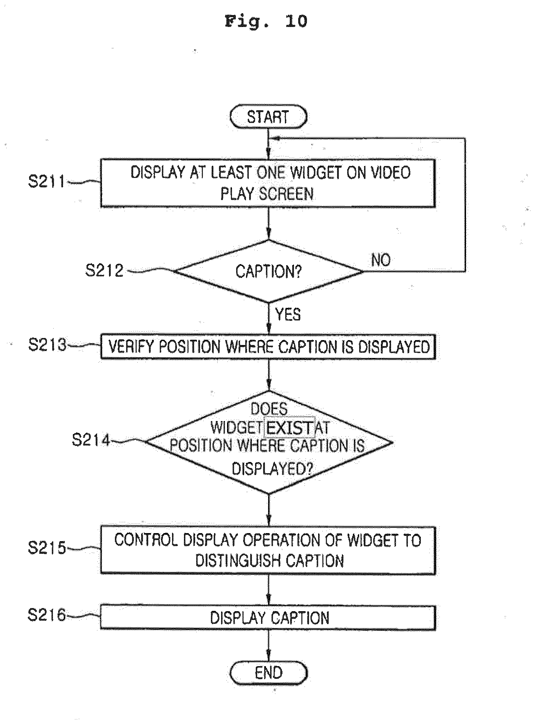

Hereinafter, a process of controlling display operations of widgets of a broadcasting terminal according to the second comparative example will be described in detail with reference to Fig. 10.

Fig. 10 is a flowchart illustrating a process of controlling a widget display operation of a broadcasting terminal according to the second comparative example.

Referring to Fig. 10, if a video file including a caption stored in a memory 140 is selected by a user through an input unit 120, a control unit 170 of a broadcasting terminal 100 drives an application to play the selected video file and plays the video file.

In operation S211, the control unit 170 displays the widgets in a predetermined region on a video play screen if a key signal is inputted from a user through the input unit 120 to display at least one widget.

In operation S212, if the caption is displayed on the video play screen in a state that the widgets are displayed on the video play screen, the control unit 170 verifies a position of the video play screen where the caption will be displayed in operation S213.

That is, the control unit 170 finds the predetermined display position of the caption included in the video file, and verifies whether the widgets exist in the predetermined display position of the caption in operation S212.

The control unit 170 checks whether the color value of a predetermined range of the position where the widgets are displayed is changed. If result of the check shows that the color value is changed, the control unit 170 may judge that the received caption is displayed at the position where the widgets are displayed.

As described above, if the widgets exist in a position where the received caption will be displayed in operation S214, the control unit 170 displays the received caption in operation S216 after controlling the display operations of the widgets to allow the caption included in the video file to be recognized on the video play screen in operation S215.

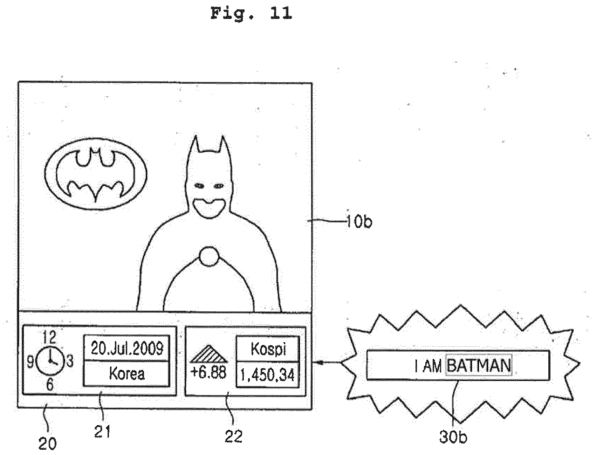

Hereinafter, a process of controlling a widget display operation of a control unit 170 will be described in detail with reference to Figs. 11 to 14.

Figs. 11 to 14 are diagrams illustrating screen states showing a process of controlling a widget display operation of a broadcasting terminal according to the second comparative example.

Referring to Fig. 11, the control unit 170 displays predetermined widgets 21 and 22 in a predetermined region 20 on a video play screen 10b when a key signal is inputted through an input unit 120 to display the widgets 21 and 22 on the video play screen 10b, in a state that a the video selected by a user is played.

Fig. 11 show that the first widget 21 providing time information and the second widget 22 providing stock information are displayed on a lower region 20 of edge regions of the video play screen 10b.

In this case, the first and second widgets 21 and 22 may be moved on the video play screen 10b according to a user's manipulation, and be displayed on a predetermined region of the video play screen 10b when displayed for the first time.

The first and second widgets 21 and 22 may be displayed on the video play screen 10b in an On Screen Display manner, and be overlapped or transparently displayed on the video play screen 10b. In this case, the transparency of the first and second widgets 21 and 22 may be varied according to a user's manipulation.

If one of the first and second widgets 21 and 22 is selected, the control unit 170 may control the Internet module 112 to access an external service server linked to the selected widget, and download detail information related to the selected widget from the external service server to display the downloaded information on the video play screen 10b or store the downloaded information in the memory 140.

In this case, if a caption ("I am Batman") 30b is scheduled to be displayed on the current video play screen 10b, the control unit 170 checks whether the display position of the caption 30b is the lower region 20 where the first and second widgets 21 and 22 are displayed.

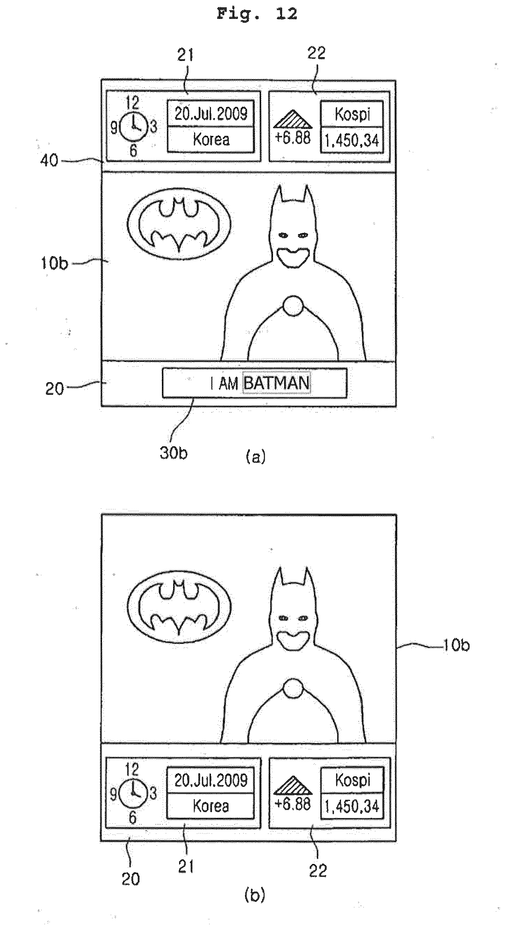

If the display position of the caption 30a is the lower region 20 where the first and second widgets 21 and 22 are displayed, as shown in Fig. 12, the control unit 170 displays the caption 30b on the lower region 20 of the video play screen 10b, and moves the positions of the first and second widgets 21 and 22 to other regions on the video play screen 10b except the lower region 20. In this case, the caption 30b may be scrolled from a first direction to a second direction, or may be displayed in a still image.

Fig. 12(a) shows that the control unit 170 has moved the positions of the first and second widgets 21 and 22 to an upper region 40 of the video play screen 10b.

In this case, the control unit 170, as shown in Fig. 12(b), may move the positions of the first and second widgets 21 and 22 to the initial lower region 20 when the display of the caption 30a is completed.

Although not shown in Fig. 12, the control unit 170 may move the positions of the first and second widgets 21 and 22 to a left or right region when the display position of the caption 30b is the lower region 20 where the first and second widgets 21 and 22 are displayed.

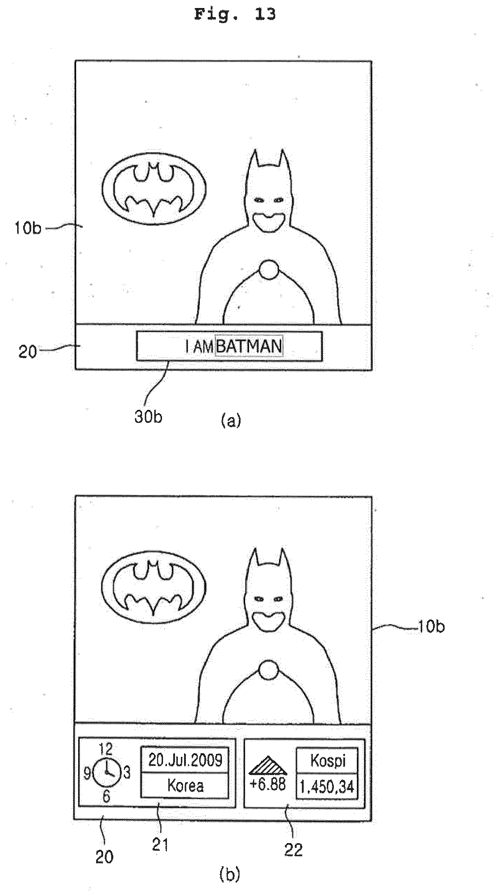

If the display position of the caption 30b in Fig. 11 is the lower region 20 where the first and second widgets 21 and 22 are displayed, as shown in Fig. 13, the control unit 170 may display the caption 30b on the lower region of the video play screen 10b and stop the display of the first and second widgets 21 and 22 until the display of the caption 30b is completed.

Fig. 13(a) shows that the control unit 170 has displayed the caption 30b on the lower region 20 where the first and second widgets 21 and 22 are initially displayed, and has stopped the display of the first and second widgets 21 and 22.

In this case, the control unit 170 may re-display the first and second widgets 21 and 22 on the lower region 20 as shown in Fig. 13(b), when the display of the caption 30b is completed.

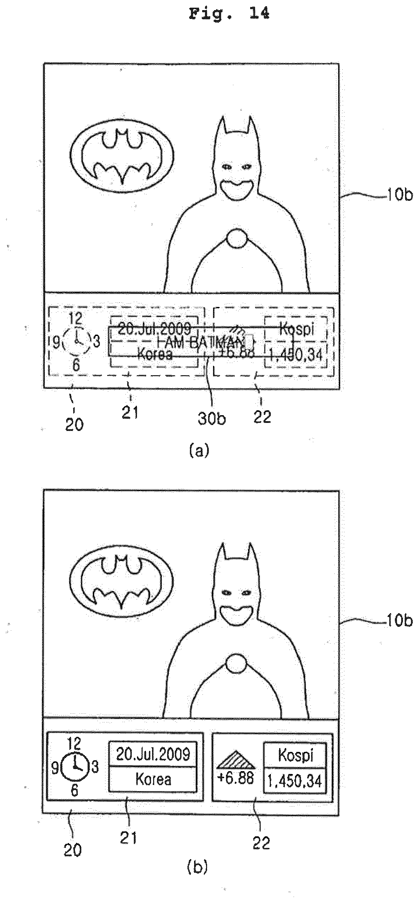

If the display position of the caption 30b in Fig. 11 is the lower region 20 where the first and second widgets 21 and 22 are displayed, as shown in Fig. 14, the control unit 170 may allow the caption 30b and the first and second widgets 21 and 22 to overlap each other in the lower region 20 and change the transparency of the first and second widgets 21 and 22 to allow a user to recognize the caption 30b.

Fig. 14(a) shows that the control unit 170 has allowed the caption 30b and the first and second widgets 21 and 22 to overlap each other in the lower region 20, and has lowered the transparency of the first and second widgets 21 and 22 to a predetermined level to allow a user to recognize the caption 30b. In this case, the transparency of the first and second widgets 21 and 22 may be varied according to a user's manipulation.

The control unit 170 may increase the distinctiveness of the caption 30b by changing the font attributes of the caption 30b. For example, a predetermined color may be inserted into the background of the caption 30b. Alternatively, the caption 30a may be changed into a bold font, or may be displayed to blink.

### <Embodiment>

An embodiment is to display widgets not to be overlapped on a broadcasting screen when the widgets are displayed to overlap the broadcasting screen and adjust the size of the broadcasting screen to maintain the previous size of the broadcasting screen before the widgets are displayed for the first time.

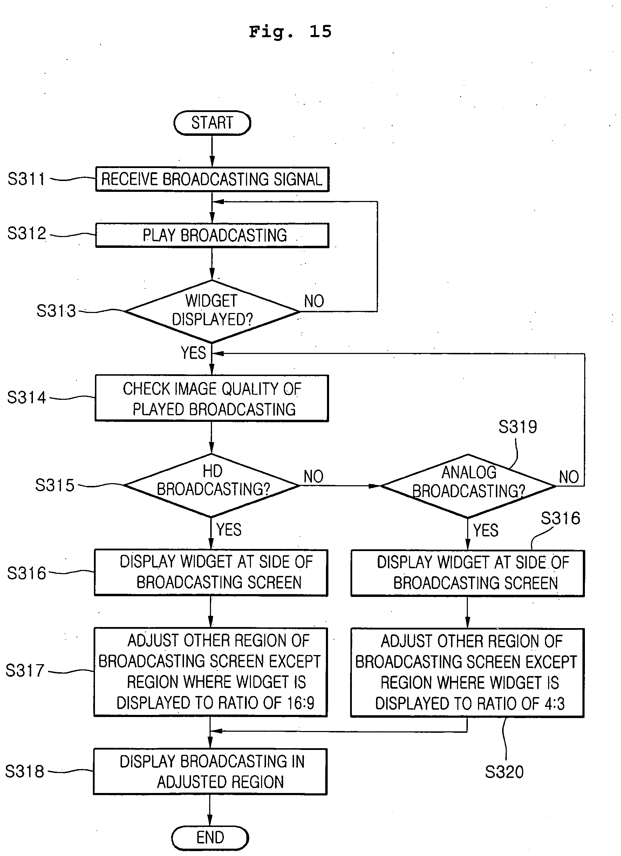

Hereinafter, a process of adjusting the size of a broadcasting screen of a broadcasting terminal according to the embodiment will be described in detail with reference to Fig. 15.

Fig. 15 is a flowchart illustrating a control process for scaling the size of a broadcasting screen of a broadcasting terminal according to the embodiment.

Referring to Fig. 15, if a broadcasting signal is received through a broadcasting module 111 or an Internet module 112 in operation S311, a control unit 170 of a broadcasting terminal 100 plays the received broadcasting on a screen of a display unit 160 in operation S312.

In this case, if a key signal is inputted from a user through an input unit 120 to display at least one widget in operation S313, the image quality of the played broadcasting is checked in operation S314.

Examples of the widgets, which are application software providing at least one information on a broadcasting screen, may include weather information providing widgets, stock information providing widgets, and time information providing widgets.

The widgets may be provided in the memory 140 as a default, or be downloaded from an external server through the communication unit 110 to be stored in the memory 140.

According to the result of the check, if the image quality of the broadcasting screen corresponds to a High-Definition (HD) broadcasting having as aspect ratio of 16:9 in operation S315, the broadcasting play screen is divided into a first region for displaying the widgets and a second region for displaying the broadcasting. The widgets are displayed on the first region in operation S316.

After adjusting the aspect ratio of the second region to 16:9 that is a HD broadcasting aspect ratio in operation S317, the control unit 170 displays the broadcasting on the second region adjusted to the aspect ratio of 16:9 in operation S318.

According to the result of the check, if the image quality of the broadcasting screen corresponds to an analog broadcasting having as aspect ratio of 4:3 in operation S319, the broadcasting play screen is divided into a first region for displaying the widgets and a second region for displaying the broadcasting (operation S316). After the widgets are displayed on the first region and the aspect ratio of the second region is adjusted to the aspect ratio of 4:3 that is an aspect ratio of an analog broadcasting in operation S320, the broadcasting is displayed on the second region adjusted to the aspect ratio of 4:3.

Although not shown in Fig. 15, the control unit 170 may check the image quality of the broadcasting signal received from the communication unit 110 as described in operation S314 if UI objects are moved to a region of the broadcasting screen except a region where the caption is displayed so as not to overlap the caption in operation S115 of Fig. 3.

That is, the control unit 170 may adjust the aspect ratio of other regions of the broadcasting screen except the region where the UI objects are displayed to the aspect ratio of 16:9 as described in operation S317 if the image quality of the checked broadcasting signal corresponds to a HD broadcasting, in a state that the UI objects are moved on the broadcasting screen not to overlap the caption.

The control unit 170 may adjust the aspect ratio of other regions of the broadcasting screen except the region where the UI objects are displayed to the aspect ratio of 4:3 as described in operation S320 if the image quality of the checked broadcasting signal corresponds to an analog broadcasting, in a state that the UI objects are moved on the broadcasting screen not to overlap the caption.

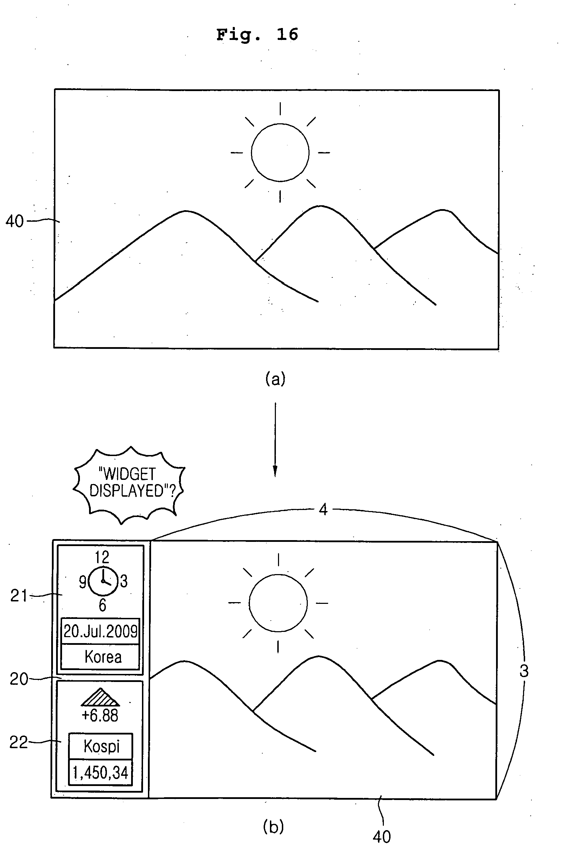

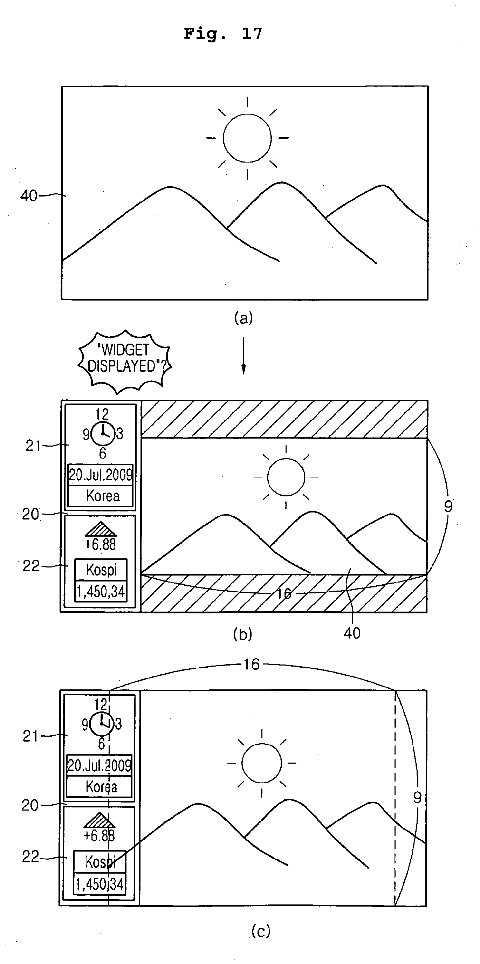

Hereinafter, a process of resizing the broadcasting play screen including the widgets according to the image quality will be described in detail with reference to Figs. 16 and 17.

Fig. 16 is a diagram illustrating a screen state showing a process of scaling a broadcasting play screen including widgets into an aspect ratio of 4:3 according to the embodiment.

Fig. 16(a) illustrates a broadcasting play screen 40 showing an analog broadcasting having an aspect ratio of 4:3, which is received from a broadcasting receiving module 111 or an Internet module 112.

If a key signal is inputted from a user through an input unit 120 to display widgets 21 and 22, as shown in Fig. 16(b), the control unit 170 divides the total screen into a first region 20 for displaying the widgets 21 and 22 and a second region 40.

After the control unit 170 displays the widgets 21 and 22 on the first region 20 and adjusts the second region 40 to an aspect ratio of 4:3, the control unit 170 displays the broadcasting received from the broadcasting receiving module 111 or the Internet module 112 in the second region that has been adjusted to the aspect ratio of 4:3.

Fig. 17 is a diagram illustrating a screen state showing a process of scaling a broadcasting play screen including widgets into an aspect ratio of 16:9 according to the embodiment.

Fig. 17(a) illustrates a broadcasting play screen 40 showing a HD broadcasting having an aspect ratio of 16:9, which is received from the broadcasting receiving module 111 or the Internet module 112.

If a key signal is inputted from a user through an input unit 120 to display widgets 21 and 22, as shown in Fig. 17(b), the control unit 170 divides the total screen into a first region 20 for displaying the widgets 21 and 22 and a second region 40.

After the control unit 170 displays the widgets 21 and 22 on the first region 20 and adjusts the second region 40 to an aspect ratio of 16:9, the control unit 170 displays the broadcasting received from the broadcasting receiving module 111 or the Internet module 112 in the second region that has been adjusted to the aspect ratio of 16:9.

In this case, as shown in Fig. 17(b), margins of the upper and lower ends of the second region that has been adjusted to the aspect ratio of 16:9 are colored in black.

As shown in Fig. 17(c), the control unit 170 may display widgets 21 and 22 in the first region 20, and allow a left portion of the second region 40 to overlap with the first region 20 upon adjustment of the second region 40 to the ratio of 16:9 and cut a right portion of the second region 40 to adjust the aspect ratio of the second region 40 to 16:9.

The embodiments according to the present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). Also, the computer may include a control unit 170 of a broadcasting terminal 100.

The broadcasting terminal and the method of controlling the same set forth herein should not be construed as limited to the configurations and methods of the embodiments described above. The above embodiments can be selectively combined in whole or in part to achieve various modifications thereof.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A terminal (100) for broadcasting, comprising:
a display unit (160) configured to display a User Interface, UI, object (21, 22) providing information on a broadcasting screen (10a, 10b);
a communication unit (110) configured to receive a broadcasting signal comprising a caption (30a, 30b); and
a control unit (170) configured to:
- check a color value of the position of the UI object;
- judge, if the color value of the position of the UI object is changed, that a position of the UI object and a position of the received caption overlap each other;
- divide the broadcasting screen into a first region (20) for displaying the UI object and a second region (40) for displaying broadcasting comprising the caption, if judging that the position of the UI object and the position of the received caption overlap each other,
- adjust, if the broadcasting signal is a High Definition, HD, broadcasting signal, an aspect ratio of the second region to an aspect ratio of 16:9, and
- display the UI object on the first region and display the broadcasting on the second region,
**characterized in that**
- when displaying the broadcasting in the second display region includes unused margins, the control unit is further configured to increase a size of the displayed broadcasting to cover the unused margins while maintaining the aspect ratio of 16:9, to display a left portion of the second region as partially overlapping with the first display region, and to cut a right portion of the second region so the broadcasting covers the unused margins, and
- the terminal is one of a mobile phone, a smart phone, a laptop computer, a desktop computer and a Personal Digital Assistants, PDA.

2. The terminal for broadcasting according to claim 1, wherein the UI object is a widget.

3. The terminal for broadcasting according to claim 1 or 2, wherein the broadcasting signal further comprises information representing the position of the caption on the broadcasting screen.

4. The terminal for broadcasting according to claim 1, wherein the control unit is configured to move the position of the UI object to the previous position of the UI object before the movement if the caption is not received through the communication unit.

5. The terminal for broadcasting according to any one preceding claim, wherein the control unit is configured to change a transparency of the UI object if judging that the position of the UI object and the position of the received caption overlap each other.

6. The terminal for broadcasting according to claim 5, wherein the control unit is configured to change the transparency of the UI object to distinguish between the UI object and the overlapped caption.

7. The terminal for broadcasting according to claim 5 or 6, wherein the control unit is configured to recover the transparency of the UI object to the previous transparency before the change if the caption is not received through the communication unit.

8. The terminal for broadcasting according to claim 1, wherein the control unit is configured to increase a distinctiveness of the caption by changing a font attributes of the caption if judging that the position of the UI object and the position of the received caption overlap each other, wherein the changing the font attributes of the caption comprises at least one of a following operations:
a predetermined color is inserted into the background of the caption, the caption is changed into a bold font or the caption is displayed in a blinking manner.

9. A method of controlling a terminal (100) for broadcasting, the method comprising:
displaying a User Interface, UI, object providing information on a broadcasting screen (10a, 10b);
receiving (S311) a broadcasting signal comprising a caption (30a, 30b);
checking whether a color value of the position where the UI object is displayed is changed when the caption (30a, 30b) is received;
judging, if the color value of the position of the UI object is changed, that a position of the UI object and a position of the received caption overlap each other;
dividing (S316) the broadcasting screen into a first region (20) for displaying the UI object and a second region (40) for displaying broadcasting comprising the caption, if it is judged that the position of the UI object and the position of the received caption overlap each other;
adjusting (S317), if the broadcasting signal is a High Definition, HD, broadcasting signal (S315), an aspect ratio of the second region to an aspect ratio of 16:9; and
displaying (S318) the UI object on the first region and displaying the broadcasting on the second region,
**characterized in that**
- when displaying the broadcasting in the second display region includes unused margins, the control unit is further configured to increase a size of the displayed broadcasting to cover the unused margins while maintaining the aspect ratio of 16:9, to display a left portion of the second region as partially overlapping with the first display region, and to cut a right portion of the second region so the broadcasting covers the unused margins, and
- the terminal is one of a mobile phone, a smart phone, a laptop computer, a desktop computer and a Personal Digital Assistants, PDA.

10. A computer-readable medium comprising code portions which, when executed on a processor, configure the processor to perform all steps of a method according to claim 9.

## Patentansprüche

1. Endgerät (100) zum Rundsenden, umfassend:
eine Anzeigeeinheit (160), die konfiguriert ist, um ein Benutzerschnittstellen-, UI, -Objekt (21, 22), das Informationen bereitstellt, auf einem Rundsendungsschirm (10a, 10b) anzuzeigen;
eine Kommunikationseinheit (110), die konfiguriert ist, um ein Rundsendungssignal zu empfangen, das eine Bildunterschrift (30a, 30b) umfasst; und
eine Steuereinheit (170), die konfiguriert ist, um:
- einen Farbwert der Position des UI-Objekts zu prüfen;
- falls der Farbwert der Position des UI-Objekts geändert wird, zu beurteilen, dass eine Position des UI-Objekts und eine Position der empfangenen Bildunterschrift einander überlappen;
- den Rundsendungsschirm in einen ersten Bereich (20) zum Anzeigen des UI-Objekts und einen zweiten Bereich (40) zum Anzeigen einer Rundsendung, die die Bildunterschrift umfasst, zu unterteilen, falls beurteilt wird, dass die Position des UI-Objekts und die Position der empfangenen Bildunterschrift einander überlappen,
- falls das Rundsendungssignal ein Hochauflösungs-, HD, -Rundsendungssignal ist, ein Seitenverhältnis des zweiten Bereichs zu einem Seitenverhältnis von 16:9 einzustellen, und
- das UI-Objekt auf dem ersten Bereich anzuzeigen und die Rundsendung auf dem zweiten Bereich anzuzeigen,
**dadurch gekennzeichnet, dass**
- wenn das Anzeigen der Rundsendung in dem zweiten Anzeigebereich nichtverwendete Seitenränder umfasst, die Steuereinheit weiterhin konfiguriert ist, um eine Größe der angezeigten Rundsendung zu erhöhen, um die nicht-verwendeten Seitenränder zu bedecken, während das Seitenverhältnis von 16:9 beibehalten wird, um einen linken Abschnitt des zweiten Bereichs als teilweise überlappend mit dem ersten Anzeigebereich anzuzeigen, und um einen rechten Abschnitt des zweiten Bereichs abzuschneiden, so dass die Rundsendung die nicht-verwendeten Seitenränder bedeckt, und
- das Endgerät eines ist aus einem Mobiltelefon, einem Smartphone, einem Laptop-Computer, einem Desktop-Computer und einem persönlichen digitalen Assistenten, PDA.

2. Endgerät zum Rundsenden gemäß Anspruch 1, wobei das UI-Objekt ein Widget ist.

3. Endgerät zum Rundsenden gemäß Anspruch 1 oder 2, wobei das Rundsendungssignal weiterhin Informationen umfasst, die die Position der Bildunterschrift auf dem Rundsendungsschirm darstellen.

4. Endgerät zum Rundsenden gemäß Anspruch 1, wobei die Steuereinheit konfiguriert ist, um die Position des UI-Objekts zu der vorigen Position des UI-Objekts vor der Bewegung zu bewegen, falls die Bildunterschrift nicht durch die Kommunikationseinheit empfangen wird.

5. Endgerät zum Rundsenden gemäß zumindest einem der vorangegangenen Ansprüche, wobei die Steuereinheit konfiguriert ist, um eine Transparenz des UI-Objekts zu ändern, falls beurteilt wird, dass die Position des UI-Objekts und die Position der empfangenen Bildunterschrift einander überlappen.

6. Endgerät zum Rundsenden gemäß Anspruch 5, wobei die Steuereinheit konfiguriert ist, um die Transparenz des UI-Objekts zu verändern, um zwischen dem UI-Objekt und der überlappenden Bildunterschrift zu unterscheiden.

7. Endgerät zum Rundsenden gemäß Anspruch 5 oder 6, wobei die Steuereinheit konfiguriert ist, um die Transparenz des UI-Objekts zu der vorigen Transparenz vor der Änderung wiederherzustellen, falls die Bildunterschrift nicht durch die Kommunikationseinheit empfangen wird.

8. Endgerät zum Rundsenden gemäß Anspruch 1, wobei die Steuereinheit konfiguriert ist, um eine Hervorhebung der Bildunterschrift durch Ändern von Schriftsatzattributen der Bildunterschrift zu erhöhen, falls beurteilt wird, dass die Position des UI-Objekts und die Position der empfangenen Bildunterschrift einander überlappen, wobei das Ändern der Schriftsatzattribute der Bildunterschrift zumindest einen der folgenden Vorgänge umfasst:
eine vorbestimmte Farbe wird in den Hintergrund der Bildunterschrift eingefügt, die Bildunterschrift wird zu einem fetten Schriftsatz geändert oder die Bildunterschrift wird auf eine blinkende Art und Weise angezeigt.

9. Verfahren zum Steuern eines Endgeräts (100) zum Rundsenden, wobei das Verfahren umfasst:
Anzeigen eines Benutzerschnittstellen-, UI, -Objekts, das Informationen bereitstellt, auf einem Rundsendungsschirm (10a, 10b);
Empfangen (S311) eines Rundsendungssignals, das eine Bildunterschrift (30a, 30b) umfasst;
Prüfen, ob ein Farbwert der Position, an der das UI-Objekt angezeigt wird, geändert wird, wenn die Bildunterschrift (30a, 30b) empfangen wird;
Beurteilen, falls der Farbwert der Position des UI-Objekts geändert wird, dass eine Position des UI-Objekts und eine Position der empfangenen Bildunterschrift einander überlappen;
Unterteilen (S316) des Rundsendungsschirms in einen ersten Bereich (20) zum Anzeigen des UI-Objekts und einen zweiten Bereich (40) zum Anzeigen der Rundsendung, die die Bildunterschrift umfasst, falls beurteilt wird, dass die Position des UI-Objekts und die Position der empfangenen Bildunterschrift einander überlappen;
Einstellen (S317), falls das Rundsendungssignal ein Hochauflösungs-, HD, -Rundsendungssignal (S315) ist, eines Seitenverhältnisses des zweiten Bereichs auf ein Seitenverhältnis von 16:9; und
Anzeigen (S318) des UI-Objekts auf dem ersten Bereich und Anzeigen der Rundsendung auf den zweiten Bereich,
**dadurch gekennzeichnet, dass**
- wenn das Anzeigen der Rundsendung in dem zweiten Anzeigebereich nichtverwendete Seitenränder umfasst, die Steuereinheit weiterhin konfiguriert ist, um eine Größe der angezeigten Rundsendung zu erhöhen, um die nicht-verwendeten Seitenränder zu bedecken, während das Seitenverhältnis von 16:9 beibehalten wird, einen linken Abschnitt des zweiten Bereichs als teilweise überlappend mit dem ersten Anzeigebereich anzuzeigen, und um einen rechten Abschnitt des zweiten Bereichs abzuschneiden, so dass die Rundsendung die nicht-verwendeten Seitenränder bedeckt; und
- das Endgerät eines ist aus einem Mobiltelefon, einem Smartphone, einem Laptop-Computer, ein Desktop-Computer und einem persönlichen digitalen Assistenten, PDA.

10. Computerlesbares Medium, das Codeabschnitte umfasst, die bei Ausführung auf einem Prozessor den Prozessor konfigurieren, um alle Schritte eines Verfahrens gemäß Anspruch 9 durchzuführen.

## Revendications

1. Terminal (100) de radiodiffusion, comprenant :
une unité (160) d'affichage configurée pour afficher un objet interface utilisateur, UI (21, 22), fournissant des informations sur un écran (10a, 10b) de radiodiffusion ;
une unité (110) de communication configurée pour recevoir un signal de radiodiffusion comprenant une légende (30a, 30b) ; et
une unité (170) de commande configurée pour :
- contrôler une valeur de couleur de la position de l'objet UI ;
- juger, si la valeur de couleur de la position de l'objet UI est changée, qu'une position de l'objet UI et une position de la légende reçue se chevauchent l'une l'autre ;
- diviser l'écran de radiodiffusion en une première région (20) pour afficher l'objet UI et une deuxième région (40) pour afficher une radiodiffusion comprenant la légende, s'il est jugé que la position de l'objet UI et la position de la légende reçue se chevauchent l'une l'autre,
- ajuster, si le signal de radiodiffusion est un signal de radiodiffusion haute définition, HD, un rapport de format de la deuxième région à un rapport de format de 16/9, et
- afficher l'objet UI sur la première région et afficher la radiodiffusion sur la deuxième région,
**caractérisé en ce que**
- lorsque l'affichage de la radiodiffusion dans la deuxième région d'affichage inclut des marges non utilisées, l'unité de commande est en outre configurée pour augmenter une taille de la radiodiffusion affichée pour recouvrir les marges non utilisées tout en maintenant le rapport de format de 16/9, pour afficher une partie gauche de la deuxième région comme se chevauchant partiellement avec la première région d'affichage, et pour couper une partie droite de la deuxième région de façon à ce que la radiodiffusion recouvre les marges non utilisées, et
- le terminal est un parmi un téléphone mobile, un téléphone intelligent, un ordinateur portable, un ordinateur de bureau et un assistant numérique personnel, PDA.

2. Terminal de radiodiffusion selon la revendication 1, dans lequel l'objet UI est un gadget logiciel.

3. Terminal de radiodiffusion selon la revendication 1 ou 2, dans lequel le signal de radiodiffusion comprend en outre des informations représentant la position de la légende sur l'écran de radiodiffusion.

4. Terminal de radiodiffusion selon la revendication 1, dans lequel l'unité de commande est configurée pour déplacer la position de l'objet UI jusqu'à la position précédente de l'objet UI avant le mouvement si la légende n'est pas reçue par l'intermédiaire de l'unité de communication.

5. Terminal de radiodiffusion selon une quelconque revendication précédente, dans lequel l'unité de commande est configurée pour changer une transparence de l'objet UI s'il est jugé que la position de l'objet UI et la position de la légende reçue se chevauchent l'une l'autre.

6. Terminal de radiodiffusion selon la revendication 5, dans lequel l'unité de commande est configurée pour changer la transparence de l'objet UI pour faire la distinction entre l'objet UI et la légende en chevauchement.

7. Terminal de radiodiffusion selon la revendication 5 ou 6, dans lequel l'unité de commande est configurée pour récupérer la transparence de l'objet UI à la transparence précédente avant le changement si la légende n'est pas reçue par l'intermédiaire de l'unité de communication.

8. Terminal de radiodiffusion selon la revendication 1, dans lequel l'unité de commande est configurée pour augmenter un caractère distinctif de la légende en changeant des attributs de police de la légende s'il est jugé que la position de l'objet UI et la position de la légende reçue se chevauchent l'une l'autre, dans lequel le changement des attributs de police de la légende comprend au moins une parmi les opérations suivantes :
une couleur prédéterminée est insérée dans le fond de la légende, la légende est passée à une police en gras ou la légende est affichée d'une manière clignotante.

9. Procédé de commande d'un terminal (100) de radiodiffusion, le procédé comprenant :
l'affichage d'un objet interface utilisateur, UI, fournissant des informations sur un écran (10a, 10b) de radiodiffusion ;
la réception (S311) d'un signal de radiodiffusion comprenant une légende (30a, 30b) ;
le contrôle si une valeur de couleur de la position où l'objet UI est affiché est changée lorsque la légende (30a, 30b) est reçue ;
le jugement, si la valeur de couleur de la position de l'objet UI est changée, qu'une position de l'objet UI et une position de la légende reçue se chevauchent l'une l'autre ;
la division (S316) de l'écran de radiodiffusion en une première région (20) pour afficher l'objet UI et une deuxième région (40) pour afficher une radiodiffusion comprenant la légende, s'il est jugé que la position de l'objet UI et la position de la légende reçue se chevauchent l'une l'autre ;
l'ajustement (S317), si le signal de radiodiffusion est un signal de radiodiffusion haute définition, HD, (S315) d'un rapport de format de la deuxième région à un rapport de format de 16/9 ; et
l'affichage (S318) de l'objet UI sur la première région et l'affichage de la radiodiffusion sur la deuxième région,
**caractérisé en ce que**
- lorsque l'affichage de la radiodiffusion dans la deuxième région d'affichage inclut des marges non utilisées, l'unité de commande est en outre configurée pour augmenter une taille de la radiodiffusion affichée pour recouvrir les marges non utilisées tout en maintenant le rapport de format de 16/9, pour afficher une partie gauche de la deuxième région comme se chevauchant partiellement avec la première région d'affichage, et pour couper une partie droite de la deuxième région de façon à ce que la radiodiffusion recouvre les marges non utilisées, et
- le terminal est un parmi un téléphone mobile, un téléphone intelligent, un ordinateur portable, un ordinateur de bureau et un assistant numérique personnel, PDA.

10. Support lisible par ordinateur comprenant des parties de code qui, lorsqu'elles sont exécutées sur un processeur, configurent le processeur pour mettre en œuvre toutes les étapes d'un procédé selon la revendication 9.
